# FASCICULE DE BREVET EUROPEEN

(11) **EP 2 572 124 B1**
(45) Date de publication et mention de la délivrance du brevet: **22.04.2015**
(21) Numéro de dépôt: 11727208.8
(22) Date de dépôt: 18.05.2011
(51) Int. Cl.: F16J 1/12, F16J 7/00

(54) **FIXATION ELASTIQUE POUR PISTON DE MOTEUR A TAUX DE COMPRESSION VARIABLE**
ELASTISCHES FIXIERELEMENT FÜR EINEN KOLBEN EINES MOTORS MIT VARIABLEM KOMPRESSIONSVERHÄLTNIS
ELASTIC FIXING ELEMENT FOR A PISTON OF A VARIABLE COMPRESSION RATIO ENGINE

(30) Priorité: 19.05.2010 FR 1002103
(43) Date de publication de la demande: 27.03.2013
(73) Titulaire: Rabhi, Vianney, 69006 Lyon (FR); MCE-5 Development, 69003 Lyon (FR)
(72) Inventeur: BIGOT, Sylvain, F-64320 Idron (FR); RABHI, Vianney, 69006 Lyon (FR)
(74) Mandataire: Vuillermoz, Bruno
(86) Numéro de dépôt international: PCT/FR2011/000301
(87) Numéro de publication internationale: WO 2011/144826

(56) Documents cités:
- DE-A1- 3 218 320
- FR-A1- 2 763 097

## Description

La présente invention a pour objet une fixation élastique pour piston de moteur à taux de compression variable permettant le maintien en serrage et/ou l'indexation en rotation dudit piston par rapport à un organe de transmission.

On connaît, d'après les brevets internationaux WO98/51911, WO00/31377, WO03/008783 appartenant au demandeur, différents dispositifs mécaniques pour moteur à cylindrée variable.

On remarque que le brevet international WO98/51911 au nom du demandeur décrit un dispositif servant à améliorer le rendement global des moteurs à combustion interne à pistons utilisés à charge et régime variables par adaptation en marche de leur cylindrée effective et/ou de leur rapport volumétrique. Ce type de moteur étant également connu par l'homme de l'art sous la dénomination de « moteur à taux de compression variable », cette dénomination sera retenue dans le texte qui suit.

On constate que selon le brevet international WO00/31377 au nom du demandeur, le dispositif de transmission mécanique pour moteur à taux de compression variable comprend un piston solidaire dans sa partie inférieure d'un organe de transmission coopérant d'une part avec un dispositif de guidage à roulement, et d'autre part avec une roue dentée solidaire d'une bielle permettant de réaliser la transmission du mouvement entre ledit piston et ladite bielle.

On note que selon le brevet international WO03/008783 au nom du demandeur le dispositif de transmission mécanique pour moteur à taux de compression variable comprend au moins un cylindre dans lequel se déplace un piston qui est solidaire, dans sa partie inférieure, d'un organe de transmission coopérant d'une part au moyen d'une crémaillère de faible dimension avec un dispositif de guidage à roulement, et d'autre part au moyen d'une autre crémaillère de forte dimension avec une roue dentée solidaire d'une bielle. Ledit dispositif de transmission mécanique pour moteur à taux de compression variable comprend également au moins une crémaillère de commande coopérant avec la roue dentée, des moyens de fixation du piston sur l'organe de transmission qui offrent une précontrainte de serrage, des moyens de liaison qui permettent de rigidifier les dents des crémaillères, et des moyens de renforcement et d'allégement de la structure de la roue dentée.

On voit que selon le brevet international WO03/008783 le piston solidaire dans sa partie inférieure d'un organe de transmission comporte une jupe de guidage qui assure le centrage dudit piston dans le cylindre du moteur à taux de compression variable, tandis que le dispositif de guidage à roulement assure l'orientation dudit piston dans ledit cylindre.

On note que selon le brevet international WO00/31377 au nom du demandeur, le piston comporte un socle qui est relié par l'intermédiaire d'une tige de liaison de section en T à une crémaillère constituée de deux demi-crémaillères au moyen d'une vis de serrage.

On remarque que selon le brevet international WO03/008783 au nom du demandeur, la crémaillère antérieurement constituée de deux demi-crémaillères n'est plus constituée que d'une seule pièce et est renommée « organe de transmission ».

En outre, ce même brevet décrit une autre manière de fixer le piston sur son organe de transmission qui consiste en des moyens de fixation qui offrent une précontrainte de serrage et assurent le centrage du piston sur ledit organe de transmission.

Ces moyens de serrage sont constitués d'un alésage fileté réalisé dans le pied de soutènement du piston qui coopère avec un axe fileté solidaire de l'organe de transmission.

En outre, selon ce brevet, le centrage entre le piston et l'organe de transmission est assuré par un alésage lisse réalisé dans le pied de soutènement du piston coaxialement à l'alésage fileté, qui coopère avec une portion lisse prévue sur l'axe vertical de l'organe de transmission.

Si le mode de fixation décrit dans le brevet international WO03/008783 au nom du demandeur constitue un progrès significatif par rapport au brevet international WO00/31377, il n'y a pas de solution qui garantisse l'absence de desserrage du piston de son organe de transmission.

En outre, il n'est pas proposé de solution pour assurer à la fois la précontrainte de serrage nécessaire entre le piston et l'organe de transmission, et l'indexation en rotation dudit piston.

En effet ladite indexation est nécessaire pour mettre face à face les embrèvements de soupapes réalisés sur la calotte du piston et les soupapes, ou pour orienter un éventuel bol aménagé sur la calotte du piston par rapport à un injecteur logé dans la culasse.

En effet, si on veut à la fois s'assurer de la valeur de l'effort de serrage et de l'indexation en rotation, il est nécessaire d'indexer en rotation les filets réalisés à la fois dans le pied de soutènement du piston et sur l'organe de transmission, tout en maîtrisant leur localisation. Une telle indexation des filets est difficilement envisageable en production en grande série.

Une autre solution pour assurer simultanément le serrage et l'indexation en rotation du piston par rapport à l'organe de transmission serait d'interposer une rondelle d'épaisseur entre ledit piston et ledit organe de transmission.

En ce cas, la hauteur totale de l'ensemble piston/organe-de-transmission devient variable et il est nécessaire de tenir compte de cette variation dans le réglage initial du taux de compression du moteur à taux de compression variable.

De plus, il faut disposer de rondelles de différentes épaisseurs ou fabriquer lesdites rondelles à l'unité. Cette contrainte est également difficilement envisageable en production en grande série.

D'autres problèmes sont posés par la fixation du piston sur son organe de transmission telle que proposée dans le brevet international WO03/008783.

Parmi ceux-ci, on note que le piston doit, dans la majorité des cas, être réalisé en alliage léger à base d'aluminium. Ceci est nécessaire pour que ledit piston soit léger tout en garantissant une conductibilité thermique suffisante de sorte à rester suffisamment froid.

Le problème de l'aluminium est d'une part sa faible résistance mécanique initiale qui de surcroît se dégrade rapidement à chaud, et d'autre part son coefficient de dilatation supérieur à celui de l'acier. Ces deux points conduisent au desserrage progressif du piston de l'organe de transmission sur lequel il est fixé, par fluage et par déformation plastique du filetage réalisé dans le pied de soutènement dudit piston.

Une fois ledit assemblage desserré, la contrainte de serrage recherchée entre le piston et son organe de transmission n'est plus assurée et il peut se produire un décollement indésirable au niveau du contact entre le pied de soutènement du piston et la face supérieure de l'organe de transmission.

Ce décollement conduit au matage de la face d'appui du piston et présente un risque de rotation dudit piston. Si le piston effectue une rotation, cette dernière peut potentiellement s'accompagner de la collision entre ledit piston et les soupapes du moteur à taux de compression variable, conduisant à la destruction partielle de ce dernier.

C'est pour résoudre ces différents problèmes que la fixation élastique pour piston de moteur à taux de compression variable suivant la présente invention prévoit :
- De fournir une réserve d'élasticité suffisante entre l'organe de transmission et le piston tout en utilisant une zone de fixation sur ledit piston placée dans la partie la plus froide possible dudit piston ;
- De fournir une réserve de plasticité suffisante pour permettre - lors du serrage du piston sur son organe de transmission - d'indexer ledit piston en rotation, même lorsque la précontrainte de serrage est déjà atteinte.

Ainsi, la fixation élastique pour piston de moteur à taux de compression variable selon la présente invention se distingue de l'art antérieur en ce que, selon un mode particulier de réalisation :
- Les risques de desserrage du piston sont éliminés, de même que les risques de collision entre piston et soupapes et les risques de destruction prématurée du moteur ;
- Le besoin d'indexation des filets du piston et de l'organe de transmission est éliminé ;
- Le besoin de cales ou de rondelles d'épaisseur interposées entre le piston et l'organe de transmission est éliminé ;
- La fabrication du piston est simplifiée, celui-ci pouvant être entièrement usiné avant montage et ne comportant qu'une seule cote en hauteur ;
- Le montage du piston est simplifié, avec une indexation facilitée dudit piston par rapport à l'organe de transmission ;
- Les dispersions de taux de compression entre deux cylindres d'un même moteur sont réduites du fait d'une hauteur quasi constante de l'ensemble piston/organe-de-transmission.

La fixation élastique pour piston de moteur à taux de compression variable, suivant la présente invention est constituée d'au moins une tige métallique maintenue en tension entre ledit piston et ledit organe de transmission et qui applique une forte pression de contact entre la base dudit piston et la face supérieure dudit organe de transmission, ledit piston étant d'une part serré selon un angle préalablement calculé permettant que la tige métallique constitué d'un goujon soit soumis à un effort de tension recherché et que la précontrainte de serrage soit atteinte entre ledit piston et l'organe de transmission et d'autre part indexé en rotation par rapport à l'organe de transmission, par un serrage additionnel qui n'augmente pas significativement la précontrainte de serrage, ledit goujon continuant à s'allonger à même effort de tension par déformation plastique.

La fixation élastique pour piston de moteur à taux de compression variable, suivant la présente invention comporte une tige métallique qui est constituée d'un goujon vissé à l'une de ses extrémités directement ou indirectement dans le piston et à son autre extrémité dans la partie supérieure de l'organe de transmission.

La fixation élastique pour piston de moteur à taux de compression variable, suivant la présente invention comprend un goujon comportant un épaulement qui s'appuie sur une surface réalisée sur la face supérieure de l'organe de transmission, ledit épaulement limitant la longueur de vissage dudit goujon dans ledit organe de transmission.

La fixation élastique pour piston de moteur à taux de compression variable, suivant la présente invention comprend un goujon comportant un épaulement qui s'appuie sur une surface réalisée à l'intérieur du piston, ledit épaulement limitant la longueur de vissage dudit goujon dans ledit piston.

La fixation élastique pour piston de moteur à taux de compression variable, suivant la présente invention comprend goujon comportant une partie rétrécie en son centre.

La fixation élastique pour piston de moteur à taux de compression variable, suivant la présente invention comprend un goujon qui est vissé dans le piston par l'intermédiaire d'un manchon présentant dans sa partie supérieure un filet intérieur dans lequel est vissé le goujon, ledit manchon étant vissé dans la partie basse du pied de soutènement du piston au moyen d'un filet aménagé à l'extérieur de la partie inférieure dudit manchon qui coopère avec un filet intérieur aménagé dans ladite partie basse du pied de soutènement, ledit manchon n'étant pas en contact avec l'organe de transmission de sorte à laisser une distance (d) entre ledit manchon et ledit organe.

La fixation élastique pour piston de moteur à taux de compression variable, suivant la présente invention comprend un goujon comportant un épaulement qui s'appuie sur une surface réalisée à l'intérieur du manchon, ledit épaulement limitant la longueur de vissage dudit goujon dans ledit manchon.

La fixation élastique pour piston de moteur à taux de compression variable, suivant la présente invention comprend un manchon comportant un épaulement qui s'appuie sur une surface réalisée à l'intérieur du piston, ledit épaulement limitant la profondeur de vissage dudit manchon dans ledit piston.

La fixation élastique pour piston de moteur à taux de compression variable, suivant la présente invention comprend un goujon et un manchon qui ne forment qu'une seule pièce.

La fixation élastique pour piston de moteur à taux de compression variable, suivant la présente invention comprend un filet intérieur qui présente un sens de serrage qui est inverse au sens de serrage du filet extérieur.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en perspective illustrant les principaux composants d'un moteur à taux de compression variable dont chaque piston est solidaire d'un organe de transmission par l'intermédiaire d'une fixation élastique pour piston suivant la présente invention.
Figure 2 une vue en perspective montrant un piston solidaire d'un organe de transmission au moyen d'une fixation élastique pour piston de moteur à taux de compression variable suivant la présente invention.
Figure 3 est une vue en coupe représentant une réalisation de la fixation élastique pour piston de moteur à taux de compression variable suivant la présente invention.
Figures 4 à 7 sont des vues en coupe représentant différentes variantes de réalisation de la fixation élastique pour piston de moteur à taux de compression variable suivant la présente invention.

### Description de l'invention :

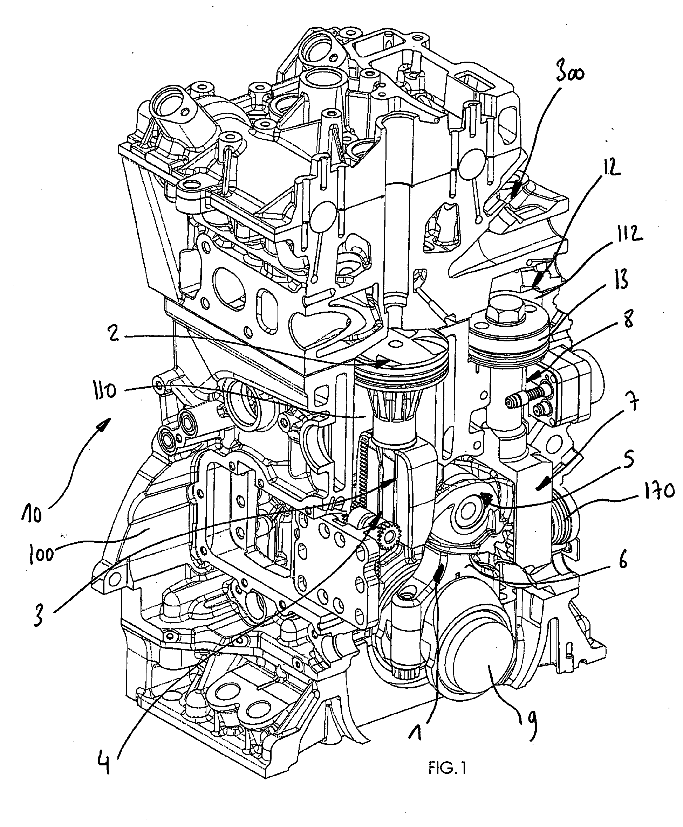

On a montré en figure 1 un bloc moteur ou carter cylindres 100 qui comprend au moins un cylindre 110 dans lequel se déplace un piston de combustion 2 au moyen d'un dispositif de transmission 1 et des moyens de pression 170 qui permettent de maintenir en position les principaux composants mobiles d'un moteur à taux de compression variable 10.

Le dispositif de transmission mécanique 1 comporte dans la partie inférieure du piston de combustion 2 un organe de transmission 3 solidaire dudit piston et coopérant, d'une part avec un dispositif de guidage à roulement 4, et d'autre part avec une roue dentée 5.

La roue dentée 5 coopère avec une bielle 6 reliée à un vilebrequin 9 afin de réaliser la transmission du mouvement entre le piston de combustion 2 et ladite bielle 6.

La roue dentée 5 coopère à l'opposé de l'organe de transmission ou crémaillère de piston 3 avec une autre crémaillère dite crémaillère de commande 7 dont la position verticale par rapport au carter cylindres 100 est pilotée par un dispositif de contrôle 12 comportant un vérin de commande 8, dont le piston de vérin 13 est guidé dans un cylindre de vérin 112 aménagé dans le carter cylindres 100 et fermé dans sa partie supérieure par une culasse commune 300.

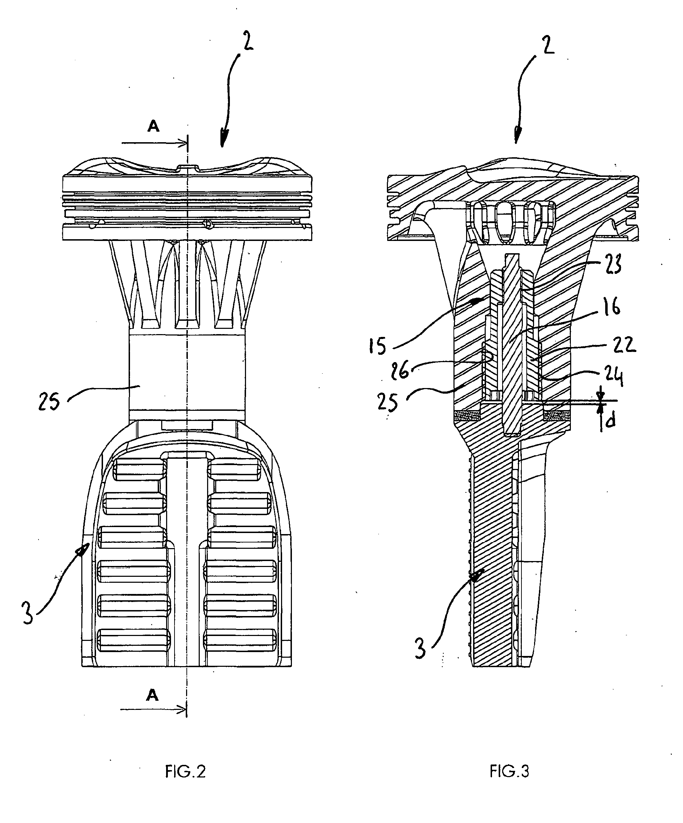

On a représenté en figures 2 à 7 différentes variantes de réalisation de la fixation élastique pour piston 2 d'un moteur à taux de compression variable 10 suivant la présente invention.

La fixation élastique pour piston 2 d'un moteur à taux de compression variable 10 est constituée d'au moins une tige métallique 15 qui est maintenue en tension entre ledit piston 2 et ledit organe de transmission 3. La tige métallique 15 maintenue en tension entre ledit piston 2 et ledit organe de transmission 3 permet d'appliquer une forte pression de contact entre la base dudit piston 2 et la face supérieure dudit organe de transmission 3.

La tige métallique 15 est constituée d'un goujon 16 qui est vissé à l'une de ses extrémités directement ou indirectement dans le piston 2 et à son autre extrémité dans la partie supérieure de l'organe de transmission 3.

La longueur du goujon 16 offre une réserve d'élasticité nécessaire pour éviter tout desserrage de l'ensemble constitué par le piston 2 et l'organe de transmission 3.

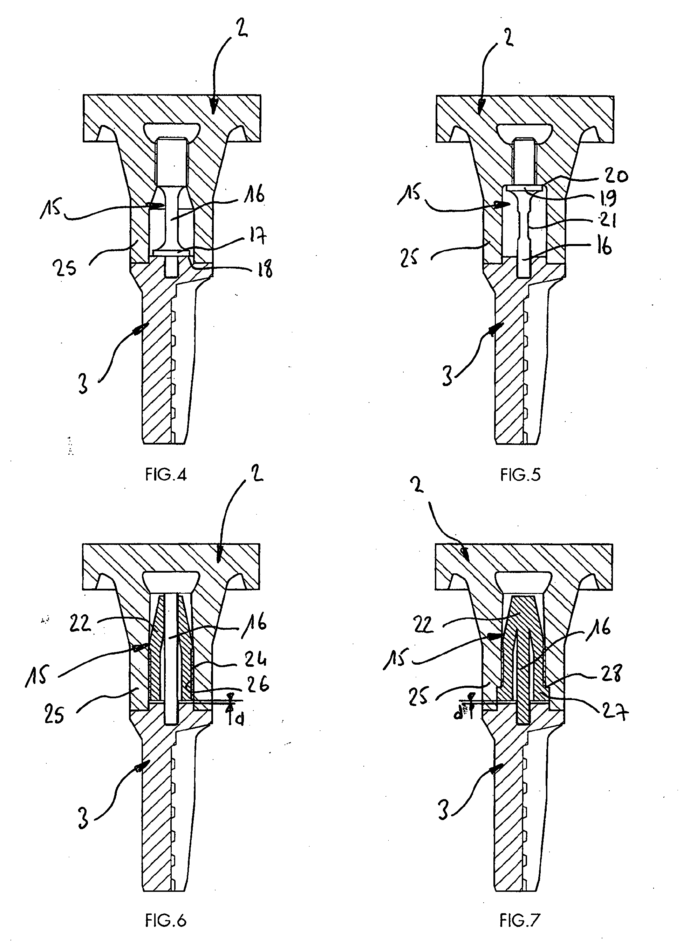

On a montré en figures 3 et 6 une réalisation de la fixation élastique suivant la présente invention dont le goujon 16 est vissé dans le piston 2 par l'intermédiaire d'un manchon 22 qui présente dans sa partie supérieure un filet intérieur 23 dans lequel est vissé le goujon 16, ledit manchon 22 étant vissé dans la partie basse du pied de soutènement 25 du piston 2 au moyen d'un filet extérieur 24 aménagé à l'extérieur de la partie inférieure dudit manchon 22 qui coopère avec un filet intérieur 26 aménagé dans ladite partie basse du pied de soutènement 25.

On note que le manchon 22 n'est pas en contact avec l'organe de transmission 3 de sorte à laisser une distance d entre ledit manchon 22 et ledit organe 3.

Selon un mode de réalisation le filet intérieur 23 présente un sens de serrage qui est inverse au sens de serrage du filet extérieur 24. A titre d'exemple, si le filet intérieur 23 est à droite le filet extérieur 24 est à gauche et inversement.

Selon ce mode de réalisation, la longueur dudit manchon 22 s'ajoute à celle du goujon 16 pour offrir la réserve d'élasticité nécessaire pour éviter tout desserrage de l'ensemble constitué du piston 2 et de l'organe de transmission 3 avec lequel il coopère.

On note que le filet intérieur 26 aménagé dans ladite partie basse du pied de soutènement 25 du piston 2 peut être réalisé par taillage, roulage ou écrouissage. En outre et selon un mode particulier de réalisation, le manchon 22 peut offrir une prise d'outil de forme quelconque qui facilite le montage dudit manchon dans le piston 2.

Le goujon 16 comporte un épaulement non représenté qui s'appuie sur une surface réalisée à l'intérieur du manchon 22, ledit épaulement limitant la longueur de vissage dudit goujon 16 dans ledit manchon 22.

Ledit épaulement peut offrir une prise d'outil de forme quelconque qui permet de visser d'abord ledit goujon 16 dans le manchon 22 puis de visser ledit goujon 16 dans l'organe de transmission 3 sans risquer que ledit goujon 16 continue à se visser dans le manchon 22 et non dans l'organe de transmission 3.

Le manchon 22 comporte un épaulement 27 qui s'appuie sur une surface 28 réalisée à l'intérieur du piston 2, ledit épaulement 27 limitant la profondeur de vissage dudit manchon 22 dans ledit piston 2 (figure 7). On note que dans chaque réalisation de la fixation élastique suivant la présente invention comportant un manchon 22 ce dernier peut comporter un épaulement 27 qui vient prendre appui sur une surface 28 réalisée à l'intérieur du piston 2.

On a montré en figure 4 une première variante de réalisation de la fixation élastique suivant la présente invention dont le goujon 16 constituant la tige métallique 15 comporte dans sa partie inférieure un épaulement 17 qui s'appuie sur une surface 18 réalisée sur la face supérieure de l'organe de transmission 3, ledit épaulement 17 limitant la longueur de vissage dudit goujon 16 dans ledit organe de transmission 3.

L'épaulement 17 peut offrir une prise d'outil de forme quelconque et permettre de visser d'abord le goujon 16 dans l'organe de transmission 3 puis de visser ledit goujon 16 dans le piston 2 sans risquer que ledit goujon 16 continue à se visser dans ledit organe de transmission 3 et non dans le piston 2.

On note que la partie supérieure de l'organe de transmission 3 peut comporter une portion lisse assurant le centrage du piston 2, similaire à celle déjà décrite dans divers brevets appartenant au demandeur.

On a montré en figure 5 une seconde variante de réalisation de la fixation élastique suivant la présente invention dont le goujon 16 constituant la tige métallique 15 comporte dans sa partie supérieure un épaulement 19 qui s'appuie sur une surface 20 réalisée à l'intérieur du piston 2, ledit épaulement 19 limitant la longueur de vissage dudit goujon 16 dans ledit piston 2 (figure 5).

L'épaulement 19 peut offrir une prise d'outil de forme quelconque, ladite prise permettant de visser d'abord ledit goujon 16 dans le piston 2 puis de visser ledit goujon 16 dans l'organe de transmission 3 sans risquer que ledit goujon 16 continue à se visser dans ledit piston 2 et non dans l'organe de transmission 3.

Le goujon 16 peut comporter une partie rétrécie 21 en son centre permettant, en calculant sa section, de maîtriser l'élasticité dudit goujon.

On a montré en figure 7 une troisième variante de réalisation de la fixation élastique suivant la présente invention dont le goujon 16 n'est plus vissé dans le manchon 22, mais est réalisé dans la même pièce de métal, ce qui a pour effet de supprimer les filets réalisés sur le goujon 16 et dans le manchon 22 nécessaires à l'assemblage de ces deux pièces. Ainsi le goujon 16 et le manchon 22 sont réalisés d'une seule pièce.

Un autre mode de réalisation consiste à réaliser le manchon 22 et le goujon 16 séparément, et à les assembler non plus par vissage, mais par exemple par frettage, sertissage ou tout autre procédé d'assemblage connu de l'homme de l'art.

### Fonctionnement de l'invention :

La fixation élastique pour piston 2 de moteur à taux de compression variable 10 selon l'invention et selon un mode particulier de réalisation illustré en figures 3 et 6 se monte comme suit : le manchon 22 est vissé dans le pied de soutènement 25 du piston 2, le goujon 16 est vissé dans la partie supérieure de l'organe de transmission 3, puis le goujon 16 rendu solidaire de l'organe de transmission 3 est vissé par son autre extrémité dans la partie supérieure du manchon 22 jusqu'à ce que le piston 2 entre en contact avec l'organe de transmission 3. Le goujon 16 ainsi vissé, le piston 2 et l'organe de transmission 3 se retrouvent assemblés.

Ensuite, le piston 2 est serré selon un angle préalablement calculé. Ledit angle permet que le goujon 16 soit soumis à l'effort de tension recherché et que la précontrainte de serrage soit atteinte entre ledit piston 2 et l'organe de transmission 3. Ensuite, le piston 2 est indexé en rotation par rapport à l'organe de transmission 3, par serrage additionnel. Ce serrage additionnel n'augmente pas significativement la précontrainte de serrage, le goujon 16 continuant à s'allonger à même effort de tension par déformation plastique.

Il doit d'ailleurs être entendu que la description qui précède n'a été donnée qu'à titre d'exemple et qu'elle ne limite nullement le domaine de l'invention tel que defini par les revendications.

## Revendications

1. Fixation élastique pour piston (2) de moteur à taux de compression variable (10), ledit piston (2) étant solidaire dans sa partie inférieure d'un organe de transmission (3) qui coopère d'une part avec un dispositif de guidage à roulement (4), et d'autre part avec une roue dentée (5) solidaire d'une bielle (6) afin d'assurer la transmission du mouvement entre ledit piston (2) et ladite bielle (6), **caractérisée en ce qu'**elle est constituée d'au moins une tige métallique (15) maintenue en tension entre ledit piston (2) et ledit organe de transmission (3) et qui applique une forte pression de contact entre la base dudit piston (2) et la face supérieure dudit organe de transmission (3), ledit piston (2) étant d'une part serré selon un angle préalablement calculé permettant que la tige métallique (15) constitué d'un goujon (16) soit soumis à un effort de tension recherché et que la précontrainte de serrage soit atteinte entre ledit piston (2) et l'organe de transmission (3) et d'autre part indexé en rotation par rapport à l'organe de transmission (3), par un serrage additionnel qui n'augmente pas significativement la précontrainte de serrage, ledit goujon (16) continuant à s'allonger à même effort de tension par déformation plastique.

2. Fixation élastique pour piston de moteur à taux de compression variable suivant la revendication 1, **caractérisée en ce que** la tige métallique (15) est constituée d'un goujon (16) vissé à l'une de ses extrémités directement ou indirectement dans le piston (2) et à son autre extrémité dans la partie supérieure de l'organe de transmission (3).

3. Fixation élastique pour piston de moteur à taux de compression variable suivant la revendication 2, **caractérisée en ce que** le goujon (16) comporte un épaulement (17) qui s'appuie sur une surface (18) réalisée sur la face supérieure de l'organe de transmission (3), ledit épaulement (17) limitant la longueur de vissage dudit goujon (16) dans ledit organe de transmission (3).

4. Fixation élastique pour piston de moteur à taux de compression variable suivant la revendication 2, **caractérisée en ce que** le goujon (16) comporte un épaulement (19) qui s'appuie sur une surface (20) réalisée à l'intérieur du piston (2), ledit épaulement (19) limitant la longueur de vissage dudit goujon (16) dans ledit piston (2).

5. Fixation élastique pour piston de moteur à taux de compression variable suivant la revendication 2, **caractérisée en ce que** le goujon (16) comporte une partie rétrécie (21) en son centre.

6. Fixation élastique pour piston de moteur à taux de compression variable suivant la revendication 2, **caractérisée en ce que** le goujon (16) est vissé dans le piston (2) par l'intermédiaire d'un manchon (22) présentant dans sa partie supérieure un filet intérieur (23) dans lequel est vissé ledit goujon (16), ledit manchon (22) étant vissé dans la partie basse d'un pied de soutènement (25) du piston (2) au moyen d'un filet extérieur (24) aménagé à l'extérieur de la partie inférieure dudit manchon (22) qui coopère avec un filet intérieur (26) aménagé dans ladite partie basse du pied de soutènement (25), ledit manchon (22) n'étant pas en contact avec l'organe de transmission (3) de sorte à laisser une distance (d) entre ledit manchon (22) et ledit organe (3).

7. Fixation élastique pour piston de moteur à taux de compression variable suivant la revendication 6, **caractérisée en ce que** le goujon (16) comporte un épaulement qui s'appuie sur une surface réalisée à l'intérieur du manchon (22), ledit épaulement limitant la longueur de vissage dudit goujon (16) dans ledit manchon (22).

8. Fixation élastique pour piston de moteur à taux de compression variable suivant la revendication 6, **caractérisée en ce que** le manchon (22) comporte un épaulement (27) qui s'appuie sur une surface (28) réalisée à l'intérieur du piston (2), ledit épaulement (27) limitant la profondeur de vissage dudit manchon (22) dans ledit piston (2).

9. Fixation élastique pour piston de moteur à taux de compression variable suivant la revendication 6, **caractérisée en ce que** le goujon (16) et le manchon (22) sont réalisés d'une seule pièce.

10. Fixation élastique pour piston de moteur à taux de compression variable suivant la revendication 6, **caractérisée en ce que** le filet intérieur (23) présente un sens de serrage qui est inverse au sens de serrage du filet extérieur (24).

## Patentansprüche

1. Elastisches Fixierelement für einen Kolben (2) eines Motors mit variablem Kompressionsverhältnis (10), wobei der Kolben (2) in seinem unteren Teil mit einem Übertragungselement (3) verbunden ist, das einerseits mit einer Führungseinrichtung mit Wälzlager (4) und andererseits mit einem Zahnrad (5), das mit einer Pleuelstange (6) verbunden ist, um die Übertragung der Bewegung zwischen dem Kolben (2) und der Pleuelstange (6) zu gewährleisten, zusammenwirkt, **dadurch gekennzeichnet, dass** es von mindestens einer metallischen Stange (15) gebildet ist, die in Spannung zwischen dem Kolben (2) und dem Übertragungselement (3) gehalten wird und die einen starken Kontaktdruck zwischen der Basis des Kolbens (2) und der Oberseite des Übertragungselements (3) anlegt, wobei der Kolben (2) einerseits entlang eines vorher berechneten Winkels festgeklemmt wird, der es ermöglicht, dass die metallische Stange (15), die von einem Bolzen (16) gebildet ist, einer gewollten Spannkraft unterzogen wird, und dass die Klemmvorspannung zwischen dem Kolben (2) und dem Übertragungselement (3) erreicht wird, und andererseits in Drehung in Bezug zum Übertragungselement (3) durch ein zusätzliches Festklemmen indexiert wird, das die Klemmvorspannung nicht signifikant erhöht, wobei sich der Bolzen (16) weiterhin mit derselben Spannkraft durch plastische Verformung verlängert.

2. Elastisches Fixierelement für einen Kolben eines Motors mit variablem Kompressionsverhältnis nach Anspruch 1, **dadurch gekennzeichnet, dass** die metallische Stange (15) von einem Bolzen (16) gebildet ist, der an einem seiner Enden direkt oder indirekt in den Kolben (2) und an seinem anderen Ende in den oberen Teil des Übertragungselements (3) geschraubt ist.

3. Elastisches Fixierelement für einen Kolben eines Motors mit variablem Kompressionsverhältnis nach Anspruch 2, **dadurch gekennzeichnet, dass** der Bolzen (16) einen Absatz (17) umfasst, der sich auf eine Fläche (18) stützt, die auf der Oberseite des Übertragungselements (3) vorgesehen ist, wobei der Absatz (17) die Schraublänge des Bolzens (16) in das Übertragungselement (3) begrenzt.

4. Elastisches Fixierelement für einen Kolben eines Motors mit variablem Kompressionsverhältnis nach Anspruch 2, **dadurch gekennzeichnet, dass** der Bolzen (16) einen Absatz (19) umfasst, der sich auf eine Fläche (20) stützt, die im Inneren des Kolbens (2) vorgesehen ist, wobei der Absatz (19) die Schraublänge des Bolzens (16) in den Kolben (2) begrenzt.

5. Elastisches Fixierelement für einen Kolben eines Motors mit variablem Kompressionsverhältnis nach Anspruch 2, **dadurch gekennzeichnet, dass** der Bolzen (16) einen in seiner Mitte eingezogenen Teil (21) umfasst.

6. Elastisches Fixierelement für einen Kolben eines Motors mit variablem Kompressionsverhältnis nach Anspruch 2, **dadurch gekennzeichnet, dass** der Bolzen (16) in den Kolben (2) mit Hilfe einer Hülse (22) geschraubt ist, die in ihrem oberen Teil ein Innengewinde (23) aufweist, in das der Bolzen (16) geschraubt ist, wobei die Hülse (22) in den unteren Teil eines Stützfußes (25) des Kolbens (2) mit Hilfe eines Außengewindes (24) geschraubt ist, das außerhalb des unteren Teils der Hülse (22) angeordnet ist und mit einem Innengewinde (26) zusammenwirkt, das in dem unteren Teil des Stützfußes (25) angeordnet ist, wobei die Hülse (22) nicht mit dem Übertragungselement (3) in Kontakt ist, so dass ein Abstand (d) zwischen der Hülse (22) und dem Element (3) gelassen wird.

7. Elastisches Fixierelement für einen Kolben eines Motors mit variablem Kompressionsverhältnis nach Anspruch 6, **dadurch gekennzeichnet, dass** der Bolzen (16) einen Absatz umfasst, der sich auf eine Fläche stützt, die im Inneren der Hülse (22) vorgesehen ist, wobei der Absatz die Schraublänge des Bolzens (16) in die Hülse (22) begrenzt.

8. Elastisches Fixierelement für einen Kolben eines Motors mit variablem Kompressionsverhältnis nach Anspruch 6, **dadurch gekennzeichnet, dass** die Hülse (22) einen Absatz (27) umfasst, der sich auf eine Fläche (28) stützt, die im Inneren des Kolbens (2) vorgesehen ist, wobei der Absatz (27) die Schraubtiefe der Hülse (22) in den Kolben (2) begrenzt.

9. Elastisches Fixierelement für einen Kolben eines Motors mit variablem Kompressionsverhältnis nach Anspruch 6, **dadurch gekennzeichnet, dass** der Bolzen (16) und die Hülse (22) aus einem Stück hergestellt sind.

10. Elastisches Fixierelement für einen Kolben eines Motors mit variablem Kompressionsverhältnis nach Anspruch 6, **dadurch gekennzeichnet, dass** das Innengewinde (23) eine Klemmrichtung aufweist, die zur Klemmrichtung des Außengewindes (24) entgegengesetzt ist.

## Claims

1. Elastic fixing for a piston (2) of a variable compression ratio engine (10), said piston (2) being securely attached in its bottom part to a transmission member (3) which cooperates on the one hand with a guiding device with rolling bearing (4), and on the other hand with a toothed wheel (5) securely attached to a link rod (6) in order to ensure the transmission of the movement between said piston (2) and said link rod (6), **characterized in that** it consists of at least one metal rod (15) kept under tension between said piston (2) and said transmission member (3) and which applies a strong contact pressure between the base of said piston (2) and the top face of said transmission member (3), said piston (2) being on the one hand tightened according to a previously calculated angle enabling the metal rod (15) consisting of a stud (16) to be subjected to a desired tension force and the tightening prestress to be reached between said piston (2) and the transmission member (3) and on the other hand indexed in rotation relative to the transmission member (3), by an additional tightening which does not significantly increase the tightening prestress, said stud (16) continuing to elongate with the same tension force by plastic deformation.

2. Elastic fixing for a piston of a variable compression ratio engine according to Claim 1, **characterized in that** the metal rod (15) consists of a stud (16) screwed at one of its ends directly or indirectly into the piston (2) and at its other end into the top part of the transmission member (3).

3. Elastic fixing for a piston of a variable compression ratio engine according to Claim 2, **characterized in that** the stud (16) has a shoulder (17) which bears on a surface (18) produced on the top face of the transmission member (3), said shoulder (17) limiting the length by which said stud (16) is screwed into said transmission member (3).

4. Elastic fixing for a piston of a variable compression ratio engine according to Claim 2, **characterized in that** the stud (16) has a shoulder (19) which bears on a surface (20) produced inside the piston (2), said shoulder (19) limiting the length by which said stud (16) is screwed into said piston (2).

5. Elastic fixing for a piston of a variable compression ratio engine according to Claim 2, **characterized in that** the stud (16) has a constricted part (21) in its middle.

6. Elastic fixing for a piston of a variable compression ratio engine according to Claim 2, **characterized in that** the stud (16) is screwed into the piston (2) via a sleeve (22) that has in its top part an internal thread (23) into which said stud (16) is screwed, said sleeve (22) being screwed into the bottom part of a supporting foot (25) for the piston (2) by means of an external thread (24) formed on the outside of the bottom part of said sleeve (22) which cooperates with an internal thread (26) formed in said bottom part of the supporting foot (25), said sleeve (22) not being in contact with the transmission member (3) so as to leave a distance (d) between said sleeve (22) and said member (3).

7. Elastic fixing for a piston of a variable compression ratio engine according to Claim 6, **characterized in that** the stud (16) has a shoulder which bears on a surface produced inside the sleeve (22), said shoulder limiting the length by which said stud (16) is screwed into said sleeve (22).

8. Elastic fixing for a piston of a variable compression ratio engine according to Claim 6, **characterized in that** the sleeve (22) has a shoulder (27) which bears on a surface (28) produced inside the piston (2), said shoulder (27) limiting the depth by which said sleeve (22) is screwed into said piston (2).

9. Elastic fixing for a piston of a variable compression ratio engine according to Claim 6, **characterized in that** the stud (16) and the sleeve (22) are produced in a single piece.

10. Elastic fixing for a piston of a variable compression ratio engine according to Claim 6, **characterized in that** the internal thread (23) has a direction of tightening which is the reverse of the direction of tightening of the external thread (24).
